# EUROPEAN PATENT APPLICATION

(11) **EP 2 281 961 A1**
(43) Date of publication of application: **09.02.2011**
(21) Application number: 09008327.0
(22) Date of filing: 25.06.2009
(51) Int. Cl.: E04B 1/76, B32B 5/24

(54) **Aerogel containing composite materials**

(71) Applicant: Knauf Insulation Technology GmbH, 9586 Fürnitz (AT)
(72) Inventor: Mente, Markus, 9500 Villach (AT); Seiler, Albert, 9710 Feistritz/Drau (AT)
(74) Representative: Müller-Boré & Partner Patentanwälte

(57) **Abstract**

The present invention relates to composite materials, comprising a fibrous material and an aerogel, which can be handled easily and exhibit improved insulation properties when compared to fiber-only materials.

## Description

The present invention relates to composite materials, comprising a fibrous material and an aerogel, which can easily be handled and exhibit improved insulation properties when compared to fiber-only materials.

A wide variety of materials for thermal and acoustic insulation are known. Polymeric fibers, resins and foams, mineral fiber based materials like glass wool, stone wool, slag wool, as well as wood wool, and vacuum based materials are among those most frequently used in such thermal and/or acoustic insulation applications.

The insulation efficiency, usually expressed by the material's thermal conductivity λ, is a physical value inherent to the material and expresses the material's general heat insulation ability. For example, a typical mineral wool may have a thermal conductivity of 0.035 W/m·K.

Moreover, a material's thermal conduction resistance describes its specific thermal insulation efficiency, which typically improves with an increasing thickness of such materials. For example, a typical mineral wool sheet having a thickness of 20 cm will be more efficient in thermal insulation than a mineral wool sheet having a thickness of 10 cm.

Thus, the overall thermal and acoustic insulation efficiency is typically limited by the type, shape and thickness of the material used.

Aerogels are known to have excellent insulation properties but are hard to handle and very costly if used as such. Accordingly, products have been developed which incorporate said aerogels into polyester fabrics. However, these aerogel-containing fabrics are disadvantageous since they are hard to handle, particularly in terms of cutting and forming the respective fabrics for customized use. In addition, the polyester fibers represent health and environmental hazards and thus can only be used restrictively, even more so since these products are complicated to produce and therefore expensive.

Accordingly, a need exists for new composite materials which are easy to handle such as fiber based insulation materials, but exhibit improved thermal and acoustic insulation properties when compared to said fiber-based materials of the same thickness.

Therefore, the technical problem underlying the present invention is to provide an insulation material which should be easy to handle and which should have improved insulation properties.

The above technical problem is solved by providing the embodiments characterized in the claims.

In particular, there is provided a composite material comprising a fibrous material and an aerogel, wherein said fibrous material is selected from the group consisting of natural fibers, mineral wool, wood wool, and a combination thereof.

According to the present invention, the term "composite material" is not specifically limited and includes all materials, in any form, which comprise a fibrous material and an aerogel in such a way that a synergistic effect of both components in terms of handling and insulation efficacy occurs.

The composite material of the present invention may, of course, be combined with further functional materials, e.g. in form of layers in a laminate, which are not limited in any respect. Examples of such additional layers, without any limitation thereto, are stabilizing layers, acoustic insulation layers, and the like.

Moreover, the shape and size of said composite material is not limited and may, according to one embodiment of the present invention, be in the form of sheets, strips, flakes or pellets of various thicknesses and diameters.

According to a further embodiment, the composite material of the present invention has a thickness or diameter in the range of 10 to 400 mm. However, the thickness or diameter of the above-defined composite material is not limited thereto and may, for example, be in the range of 20 to 300 mm, preferably in the range of 30 to 250 mm, and more preferably in the range of 40 to 200 mm.

Moreover, the term "fibrous material" as used herein is not specifically restricted and includes any natural fiber, mineral wool, wood wool, or combinations thereof, which comprises continuous filaments of any length and thickness, preferably in an interwoven manner, thus forming a framework and voids in between said framework.

The term "natural fibers" as defined herein includes any vegetable or animal based fibers, for example cotton, jute, flax, ramie, sisal, hemp, or catgut, mohair and alpaca.

According to the present invention, the term "mineral wool" is not particularly restricted and means any fiber wool which is based on natural or synthetic mineral or metal oxides. According to the present invention, said mineral wool may, without limitation thereto, typically comprise a binder. Examples of binder usable according to the present invention include formaldehyde-containing binders, such as phenol formaldehyde binders, or formaldehyde-free binders such as melamin or ECOSE™, polyester resins, epoxy resins, water glass, and the like.

As a preferred embodiment, the mineral wool of the above-defined composite material is selected from glass wool, rock wool and slag wool.

There are no specific restrictions with respect to the glass wool, rock wool or slag wool usable according to the present invention. For example, a glass wool, a rock wool or a slag wool having a bulk density in the range of 5 to 250 kg/m³, preferably in the range of 50 to 200 kg/m³, more preferably in the range of 60 to 180 kg/m³ and even more preferably in the range of 80 to 150 kg/m³ may be used in the composite material of the present invention. Additionally, according to the present invention, combinations of both glass wool, rock wool and slag wool may be used as said above-defined mineral wool.

The term "wood wool" used herein is not specifically restricted and includes any fibrous material which comprises wood slivers or shavings. For example, a typical wood wool usable in the present invention may comprise slivers which have a thickness in the range of 0.15 to 1.2 mm, a width in the range of 0.5 to 4.5 mm, and a length in the range of 50 to 500 mm.

Moreover, the bulk density of said wood wool usable in the above-defined composite material is not specifically restricted and includes, for example, bulk densities in the range of 50 to 700 kg/m³, preferably in the range of 80 to 600 gk/m³, more preferably in the range of 120 to 500 kg/m³, and even more preferably in the range of 250 to 400 kg/m³.

As already mentioned before, the composite material may comprise a natural fiber, mineral wool, a wood wool and a combination of both, as the fibrous material. For example, the composite material of the present invention may comprise only a mineral wool, such as rock wool or slag wool, or may comprise only a wood wool, or only a natural fiber. Each of the expressions "a natural fiber", "a mineral wool" and "a wood wool" are not understood herein as limited to only one specific type of mineral wool or wood wool, respectively, but may include a mixture of different wools of the respective type. For example, a mineral wool may be used which comprises mineral wools of different fiber lengths or densities, either as a mix or as individual portions, e.g. in from of layers in a sandwich-like structure.

The same applies in case the fibrous material of the present invention comprises a combination of a mineral wool and a wood wool, i.e. both types of wool may be mixed to result in an interwoven composite fiber material, or both types of wool may be present in individual portions, such as in layers in a sandwich-like structure.

In one embodiment, the composite material as defined above has a bulk density in the range of 5 to 300 kg/m³.

However, according to the present invention, the composite material as defined above is not restricted in terms of its bulk density and may comprise a bulk density in the range of 10 to 280 kg/m³, preferably in the range of 30 to 220 kg/m³ and more preferably in the range of 50 to 200 kg/m³.

The term "aerogel" used herein is not specifically restricted and means any porous material which has a porosity of more than 75%. Preferably, the aerogel usable according to the present invention has a porosity of more than 80%, and more preferably of 85% or more, and even more preferably of 90% and more.

Examples of such aerogels are silica aerogels, carbon aerogels, alumina aerogels and aerogels based on agar or chalcogens, a variety of which are commercially available. According to the present invention, preferred aerogels have a bulk density of 50 to 120 kg/m³ and/or a surface area of more than 500 m²/g.

Moreover, the form of the aerogel as comprised in said fibrous material of the above-defined composite material is not specifically restricted and may, for example, have a sheet-like form or a particle form. For example, the aerogel may be present in form of particles which are evenly and/or randomly distributed within fibrous material or on a surface thereof.

According to the present invention, the composite material may, for example, comprise a layer which fully consists of the above-defined aerogel or may comprise such an aerogel in form of particles, e.g. as a powder, which are distributed throughout the composite material.

According to one embodiment of the above-defined composite material, the aerogel is dispersed within said fibrous material and/or is arranged between layers of said fibrous material.

In a further embodiment of the present invention, the composite material as defined above has an aerogel content of 80 % by weight or less. The content of said aerogel within the composite material may for example be in the range of 50% by weight or less, or in the range of 20% by weight or less.

One embodiment of the present invention relates to the composite material as defined above, wherein the aerogel has a particle size of 10 nm to 10 mm.

However, according to the present invention, the particle size of the aerogel is not limited and may for example be in the range of 20 nm to 5 mm. According to a further example, the particle size may be in a range of 50 nm to 4 mm, in a range of 100 nm to 2.0 mm, or in a rnage of 1.0 µm to 1.0 mm.

According to a specific embodiment of the composite material as defined above, the aerogel has a thermal conductivity at 25°C of 0.030 W/m·K or less.

The aerogel usable in the present invention should generally have a low thermal conductivity, such as a thermal conductivity which is 0.028 W/m·K or less. Preferably, the aerogel usable in the above-defined laminate has a thermal conductivity of less than 0.025 W/m·K, and more preferably of less than 0.020 W/m·K, as measured at 25°C.

Examples of aerogels usable in the composite material as defined above are Nanogel™ Aerogel, which is commercially available from Cabot Corp., as well as Klebesol™, which is commercially available from AZ-Electronics.

According to the present invention, there is no specific restriction concerning the arrangement of said fibrous material and said aerogel with respect to each other. For example, the aerogel may be incorporated as particles within the fiber structure of said fibrous material, or may be arranged on one or more surfaces of said fibrous material. According to a further example, the aerogel may be arranged on the surface of a sheet of fibrous material in form of a layer of particles, on top of which another layer of fibrous material is arranged. Moreover, there is no limitation with respect to the number of such layers, i.e. the composite material according to the present invention also includes such structures, wherein multiple layers of fibrous materials and/or aerogels are stacked on top of each other.

A further embodiment of the present invention relates to the above-defined composite material, wherein the aerogel is dispersed within said fibrous material and/or is arranged between layers of said fibrous material.

Furthermore, there is no specific restriction with respect to the fiber alignment of the fibrous material within the composite material. For example, the composite material of the present invention may comprise multiple portions or layers of said fibrous material, wherein the fibers of each individual portion or layer may be aligned in a parallel, anti-parallel or perpendicular manner, e.g. in the longitudinal direction of a sheet or perpendicular thereto.

In the present invention, the thermal conductivity of the composite material is improved by combining the properties of a fibrous material and an aerogel. According to one embodiment, the above-defined composite material has a thermal conductivity of 0.035 W/m·K or less. According to a further example, the composite material as defined above has a thermal conductivity of 0.032 W/m·K or less, preferably of 0.030 W/m·K or less, more preferably of 0.025 W/m·K or less and even more preferably of 0.020 W/m·K or less.

In one embodiment of the present invention, in case the fibrous material comprises a glass fiber, the above defined composite material does not include an organic polymer. According to a further embodiment, in case the fibrous material comprises a glass fiber, the composite material does not include an alkaline or earth alkaline hydroxide. According to a further embodiment of the present invention, in case the fibrous material comprises a glass fiber, the above-defined composite material does not include an organic polymer and an alkaline or earth alkaline hydroxide. According to a further embodiment of the present invention, in case the fibrous material comprises a glass fiber, the above-defined composite material does not include polyester and/or magnesium hydroxide.

Another aspect of the present invention relates to a laminate, comprising two or more layers, wherein at least one layer comprises the composite material as defined above.

According to the present invention, the above-defined laminate may for example be a laminate having a layer comprising the above-defined composite material, and at least one further functional layer, such as a paper layer, a cardboard layer, a concrete layer, a wood layer, a metal layer, a plastic layer, and the like. Such a laminate of the present invention may therefore combine the advantageous effects of the composite material of the present invention with properties of different materials, e.g. to improve the stability or the handling of said composite material.

The shape and size of the laminates according to the present invention is not specifically restricted and includes any possible shape and size which may be used in the insulation of building components, such as roofs, walls, floors, doors and windows, or vehicles, and the like.

For example, the above-defined laminate has a thickness in the range of 10 to 400 mm, preferably in the range of 50 to 300 mm, or more preferably in the range of 80 to 200 mm.

The thickness of the laminate may, however, be adjusted to the desired application of the laminate, or may be limited by the space available for installation. For example, in case the laminate is required to have increased insulating properties, the thickness may be adjusted to more than 100 mm. According to another example, in case the laminate is required to be of small dimensions, the thickness of the laminate may be adjusted to below 100 mm.

In another embodiment of the present invention, said two or more layers of the laminate as defined above are bound together by using an adhesive and/or by mechanical bonding.

The layers of the above-defined laminate may for example be bound together by an adhesive for improved stability and easier handling of the laminate. The term "adhesive" as used herein is not restricted to specific adhesives, but includes any compound which is known in the art to increase the adhesion of two surfaces in contact. According to a specific embodiment of the present invention, the adhesive is selected from the group, consisting of formaldehyde-containing binders, such as phenol formaldehyde binders, or formaldehyde-free binders such as melamin or ECOSE™, polyester resins, epoxy resins, water glass, and the like.

Herein, the term "mechanical bonding" is not restricted as such and includes any type of mechanically connecting the layer of the laminate together. Examples of such mechanical bonding are sewing, stapling, needling, pressing, and the like.

A further aspect of the present invention relates to a process for manufacturing a composite material as defined above, comprising the steps of (a) providing a fibrous material, (b) applying an binder to said fibrous material, and (c) applying an aerogel before, simultaneously with or subsequently to step (b).

According to the present invention, the aerogel may be applied during the manufacturing of the fibrous material or may be applied at a later stage. For example, in case the fibrous material is a mineral wool, the aerogel may be mixed with at least a portion of the fibers, or it may be applied onto the fibers together with the binder, or may be applied onto the surface of a pre-formed fleece. Due to the aerogel's thermal stability, it may e.g. be applied before the mineral wool is heated to cure the binder or after the curing step.

In another embodiment, the above-defined process further comprises, after step (c), the step of (d) densifying the fibrous material.

For example, in case the fibrous material is a mineral wool, the aerogel may be applied at a stage before compressing the mineral wool to a desired density in order to obtain a suitably densified mineral wool fleece having the aerogel incorporated within the fiber structure.

According to a further embodiment, of the above-defined process, the aerogel is treated with water glass, a mineral wool binder, or an organic binder, before it is applied to the fibrous material in step (c). Such a treatment improves the handling and the adhesion of the aerogel and increases the final products quality.

Examples of said mineral wool binders are formaldehyde binders like formaldehyde-containing binders, such as phenol formaldehyde binders, or formaldehyde-free binders such as melamin or ECOSE™, polyester resins, epoxy resins, water glass, and the like.

Examples of organic binders are binders such as polyvinyl acetate (PVA), polyurethane (PU), plastic dispersions, and the like.

A further aspect of the present invention relates to the use of the above-defined composite material, or of the above-defined laminate, for the insulation of building components, technical units, heating systems and vehicles.

### The figures show:

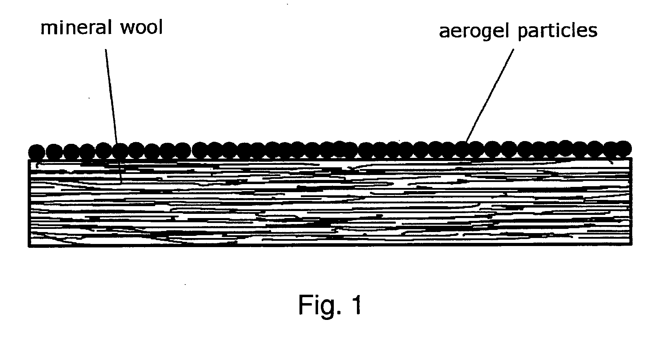

Figure 1 shows an example of a composite material according to the present invention, wherein an aerogel layer comprising aerogel particles is arranged on a main surface of a mineral wool fleece.

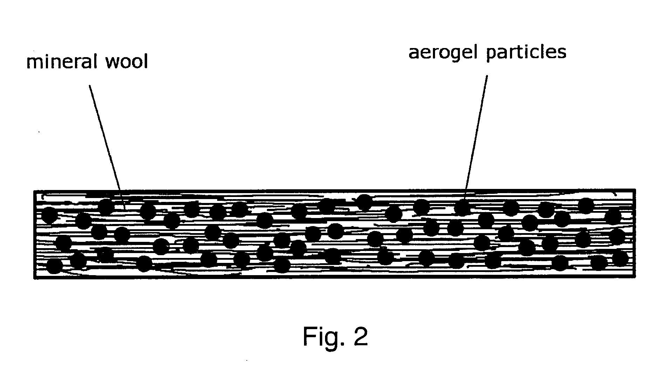

Figure 2 shows an example of a composite material according to the present invention, wherein aerogel particles are incorporated within the fiber framework of a mineral wool fleece.

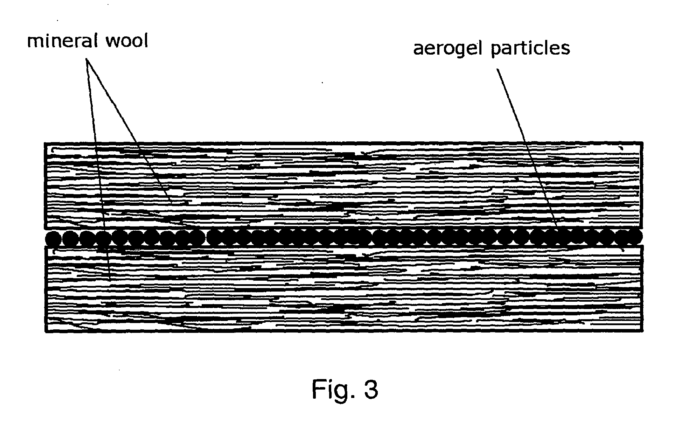

Figure 3 shows an example of a composite material according to the present invention, wherein an aerogel layer comprising aerogel particles is arranged between two layers of mineral wool.

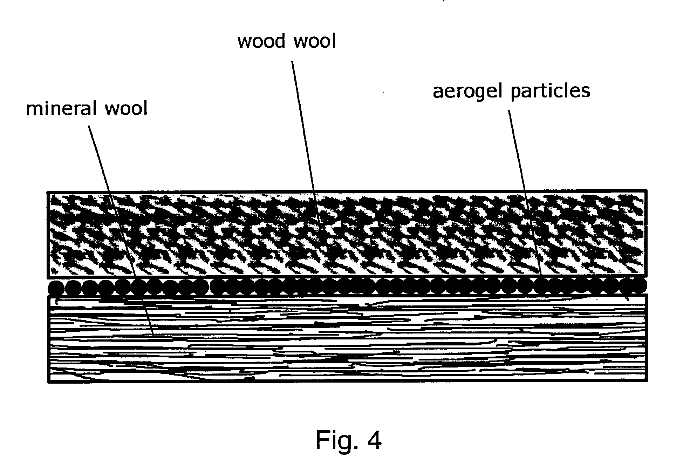

Figure 4 shows an example of a composite material according to the present invention, wherein an aerogel layer comprising aerogel particles is arranged between a mineral wool layer and a wood wool layer.

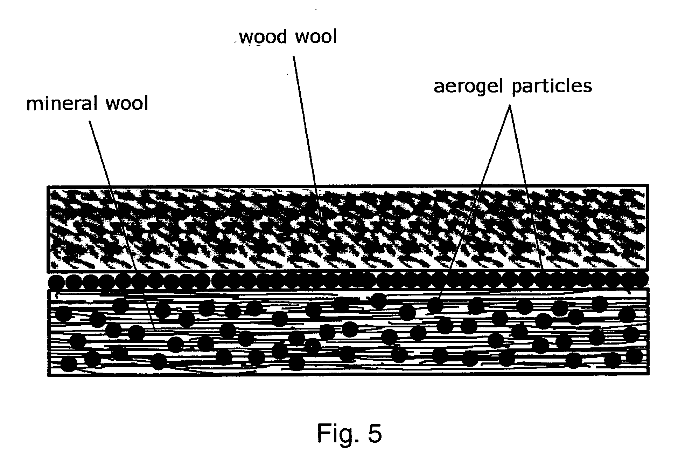

Figure 5 shows an example of a composite material according to the present invention, wherein aerogel particles are arranged within the fiber framework of a mineral wool layer, and further aerogel particles are arranged as a layer between said mineral wool layer and a further wood wool layer.

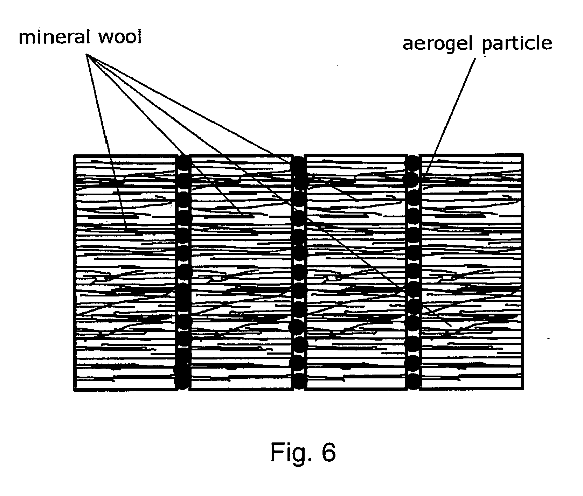

Figure 6 shows an example of a composite material according to the present invention, wherein aerogel particles are arranged in form of layers between layers of mineral wool, thus forming a lamella-type composite material.

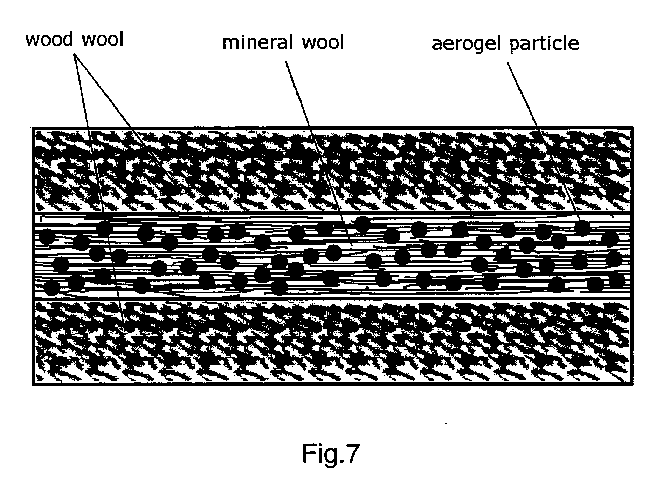

Figure 7 shows an example of a composite material according to the present invention, having a three layer structure, wherein the middle layer is a mineral wool layer having incorporated aerogel particles, and the outer layers are wood wool layers.

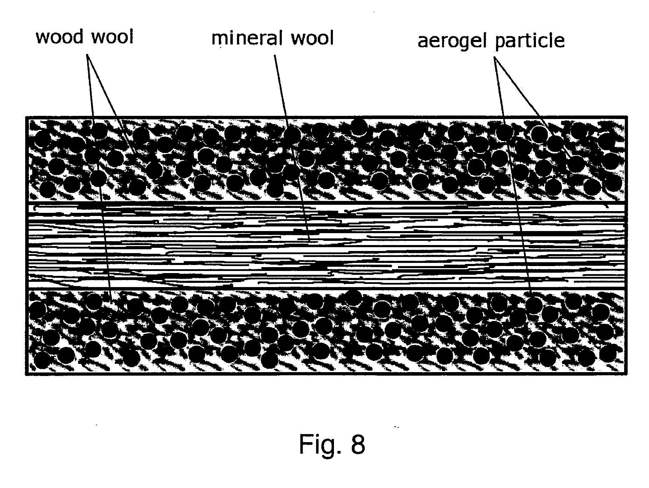

Figure 8 shows an example of a composite material according to the present invention, having a three layer structure, wherein the middle layer is a mineral wool layer and the outer layers are wood wool layers having incorporated aerogel particles.

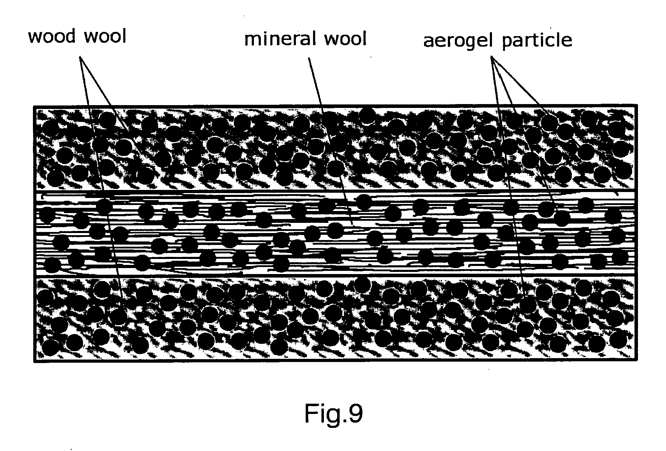

Figure 9 shows an example of a composite material according to the present invention, having a three layer structure, wherein the middle layer is a mineral wool layer and the outer layers are wood wool layers, each of the layers having incorporated aerogel particles.

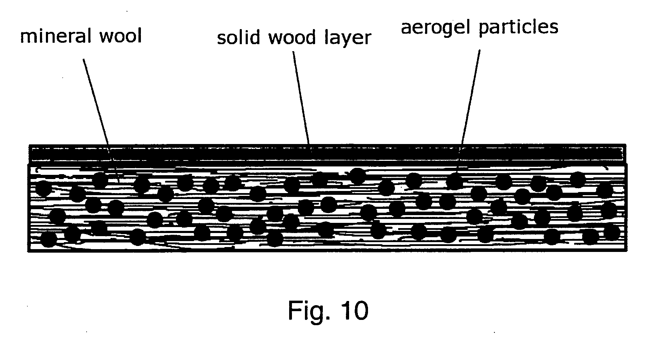

Figure 10 shows an example of a laminate according to the present invention, which comprises a mineral wool layer having incorporated aerogel particles, and a top wood layer laminated thereon.

The insulation material of the present invention is particularly suited to achieve surprisingly high insulation values while maintaining an easy handling. Opposite to polyester-based aerogel products, the handling of which is problematic in terms of cutting as well as health an environmental hazards, the composite material of the present invention combines the advantageous properties of fibrous materials, such as mineral wool or wood wool, and the excellent thermal insulation properties of aerogels. As a result, said composite material of the present invention may easily be customized in terms of size and thickness, and is surprisingly effective in thermal and acoustic insulation. In addition, by avoiding the use of polyester fibers, the resulting health- and environmental-related hazards are minimized, while the product is easier to manufacture and thus more cost effective. In addition, the combination of a fibrous material such as mineral wool and/or wood wool aerogel results in composite materials which can be easily handled on the construction site, e.g. in terms of transportation, cutting, storage, and stability with respect to heat, moisture.

### Examples:

The present invention is further illustrated by the following examples, without any limitation thereto.

### Example 1: Thermal conductivity of a composite material comprising mineral wool and aerogel

A composite material sheet having a size of 500 x 500 mm, a thickness of 28 mm (as measured according to EN 823) and a mass of 276 g was evaluated in terms of thermal conductivity in a single plate thermal conductivity measuring device EP500 No. 5 (EN 1964-2), wherein the plate was arranged horizontally and the heating side oriented in a top direction. The measurement itself was carried out according to ISO 8302 or EN 12667, respectively

The pressure during the measurement was 0.25 kPa and the bulk density of the sample was 109.5 kg/m³.

The thermal conductivity at 10°C average sample temperature was determined as lambda-10 = 32.02 mW/(m·K).

### Example 2: Thermal conductivity of an aerogel (NANO GEL)

An aerogel sheet (NANO GEL, commercially available from Cabot Corp.) having a size of 500 x 500 mm and a thickness of 26 mm (as measured according to EN 823) was evaluated in terms of thermal conductivity in a single plate thermal conductivity measuring device EP500 No. 5 (EN 1964-2), wherein the plate was arranged horizontally and the heating side oriented in a top direction. The measurement itself was carried out according to ISO 8302 or EN 12667, respectively

The pressure during the measurement was 0.25 kPa.

The thermal conductivity at 10°C average sample temperature was determined as lambda-10 = 20.30 mW/(m·K).

### Example 3: Thermal conductivity of a composite material comprising mineral wool and aerogel

A composite material sheet having a size of 500 x 500 mm, a thickness of 28 mm (as measured according to EN 823) and a mass of 303 g was evaluated in terms of thermal conductivity in a single plate thermal conductivity measuring device EP500 No. 5 (EN 1964-2), wherein the plate was arranged horizontally and the heating side oriented in a top direction. The measurement itself was carried out according to ISO 8302 or EN 12667, respectively

The pressure during the measurement was 0.25 kPa and the bulk density of the sample was 120.2 kg/m³.

The thermal conductivity at 10°C average sample temperature was determined as lambda-10 = 30.15 mW/(m·K).

## Claims

1. A composite material comprising a fibrous material and an aerogel, wherein said fibrous material is selected from the group consisting of natural fibers, mineral wool, wood wool, and a combination thereof.

2. The composite material according to claim 1, wherein the mineral wool is selected from rock wool and slag wool.

3. The composite material according to claims 1 or 2, wherein said composite material has a bulk density in the range of 5 to 300 kg/m³.

4. The composite material according to claims 1 to 3, wherein said composite material has the form of a sheet, strips, flakes or pellets.

5. The composite material according to claim 4, having a thickness or diameter in the range of 10 to 400 mm.

6. The composite material according to any one of claims 1 to 5, having an aerogel content of 80 % by weight or less.

7. The composite material according to any one of claims 1 to 6, wherein the aerogel has a particle size of 10 nm to 10 mm.

8. The composite material according to any one of claims 1 to 7, wherein the aerogel has a thermal conductivity at 25°C of 0.030 W/m·K or less.

9. The composite material according to any one of claims 1 to 8, wherein the aerogel is dispersed within said fibrous material and/or is arranged between layers of said fibrous material.

10. The composite material according to any one of claims 1 to 9, having a thermal conductivity of 0.035 W/m·K or less.

11. A laminate, comprising two or more layers, wherein at least one layer comprises the composite material according to any one of claims 1 to 10.

12. The laminate according to claim 11, wherein said two or more layers are bound together by using an adhesive and/or by mechanical bonding.

13. A process for manufacturing a composite material according to any one of claims 1 to 10, comprising the steps of
(a) providing a fibrous material,
(b) applying an binder to said fibrous material, and
(c) applying an aerogel before, simultaneously with or subsequently to step (b).

14. The process according to claim 13, further comprising, after step (c), the step of (d) densifying the fibrous material.

15. The process according to claims 13 or 14, wherein the aerogel is treated with water glass, a mineral wool binder, or an organic binder, before it is applied to the fibrous material in step (c).

16. Use of the composite material according to any one of claims 1 to 9, or of the laminate according to claims 10 and 11, for the insulation of building components, technical units, heating systems and vehicles.
